# EUROPEAN PATENT APPLICATION

(11) **EP 4 693 819 A1**
(43) Date of publication of application: **11.02.2026**
(21) Application number: 24809199.3
(22) Date of filing: 04.09.2024
(51) Int. Cl.: H02J 50/12

(54) **WIRELESS CHARGING SYSTEM AND METHOD, AND ELECTRONIC DEVICE**

(30) Priority: 13.06.2024 CN 202410756456
(71) Applicant: Chengdu Convenientpower Semiconductor Co., Ltd., Chengdu, Sichuan 610000 (CN)
(72) Inventor: MA, Chao, Chengdu, Sichuan 610000 (CN); GUO, Zhitong, Chengdu, Sichuan 610000 (CN); TAN, Kun, Chengdu, Sichuan 610000 (CN); PENG, Xiaojun, Chengdu, Sichuan 610000 (CN); LIU, Xun, Chengdu, Sichuan 610000 (CN)
(74) Representative: Cicconetti, Andrea
(86) International application number: PCT/CN2024/116963
(87) International publication number: WO 2025/255974

(57) **Abstract**

The present disclosure provides a wireless charging system, a method, and an electronic device, relating to the technical field of wireless charging. The wireless charging system includes a receiving end module, and the rectifier of the receiving end module is provided with a circuit modulation module. The DC modulation circuit of the circuit modulation module includes a DC modulation impedance and a DC modulation switch. The controller of the receiving end module is connected to the rectifier and is configured to control the output port of the receiving end module to output a first output voltage by turning on the DC modulation switch when the DC modulation circuit meets a preset DC modulation condition. The battery connected to the receiving end module is wirelessly charged under the first output voltage. When signal transmission is realized by proceeding the load modulation on the DC side of the rectifier, the wireless charging system, the method, and the electronic device provided by the present disclosure can avoid fluctuations in the output voltage of the output port of the receiving end module along with the DC voltage output by the rectifier, thereby ensuring the output power of the receiving end module and improving the efficiency of the use of the wireless charging system.

## Description

### CROSS-REFERENCE TO RELATED APPLICATION

The present disclosure claims the priority to the Chinese patent application with the filling No. 202410756456.4 filed with the Chinese Patent Office on June 13, 2024, and entitled "WIRELESS CHARGING SYSTEM, METHOD, AND ELECTRONIC DEVICE", the contents of which are incorporated herein by reference in entirety.

### TECHNICAL FIELD

The present disclosure relates to the technical field of wireless charging, and in particular to a wireless charging system, a method, and an electronic device.

### BACKGROUND ART

A wireless charging system generally includes a transmitting end and a receiving end, wherein the transmitting end refers to the charger, and the receiving end refers to the device being charged. Energy and communication signals are transmitted between the transmitting end and the receiving end through coupling, and the transmission of energy and communication signals can be bidirectional or unidirectional.

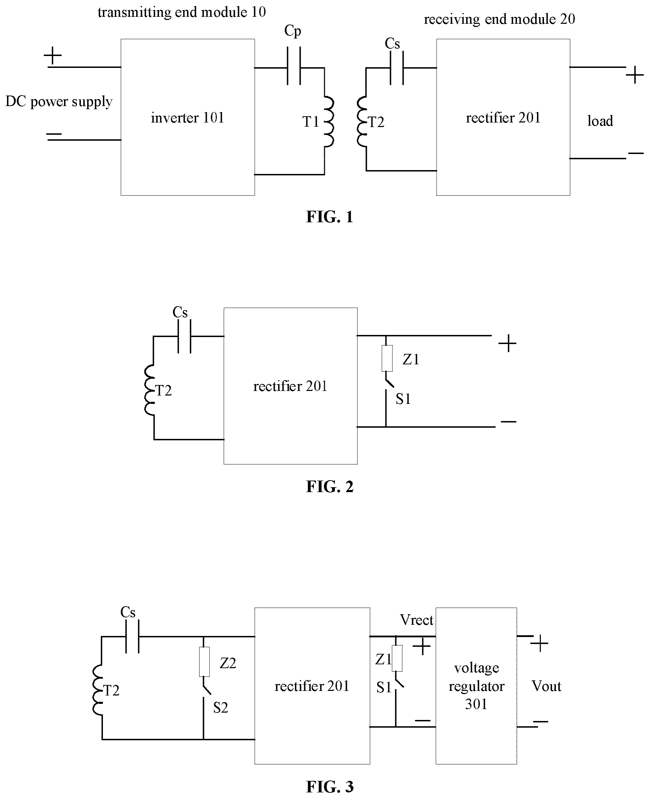

For ease of understanding, FIG. 1 shows a structure view of a wireless charging system, and for ease of explanation, FIG. 1 only illustrates the transmitting end module 10 and the receiving end module 20, wherein the transmitting end module 10 includes an inverter 101 of the transmitting end, and the coil T1 and the resonant capacitor Cp arranged at the output end of the inverter and connected in series. The receiving end module 20 includes a rectifier 201, and the coil T2 and the resonant capacitor Cs arranged on the AC side of the rectifier 201 and connected in series.

In a specific implementation, in FIG. 1, the inverter of the transmitting end converts the input DC power supply into an AC power supply and drives the coil T1. Energy is transmitted between the coil T1 and the coil T2 through coupling. The energy received by the receiving end module is converted into a DC power supply by the rectifier and supplied to the load, i.e., the battery connected to the receiving end module.

In FIG. 1, the coils T1 and T2 are respectively connected in series with the resonant capacitors Cp and Cs to form an LC resonant cavity. However, this is not limited to the LC resonance method and can also include other resonance methods such as LCL, LCCL, etc.

Based on the wireless charging system shown in FIG. 1, generally, in order to achieve signal transmission, the receiving end module usually achieves signal transmission by changing the impedance, and the method of changing the impedance is also called load modulation. However, the load modulation method often causes fluctuations in the output voltage of the rectifier, which affects the charging voltage supplied to the load by the receiving end module, resulting in fluctuations and leading to a decrease in the output power of the receiving end module. Therefore, the use efficiency of the wireless charging system is reduced.

### SUMMARY

In view of this, the objective of the present disclosure is to provide a wireless charging system, method, and electronic device to address the above technical issues.

In a first aspect, the embodiments of the present disclosure provide a wireless charging system, wherein the wireless charging system includes a receiving end module. The rectifier of the receiving end module is provided with a circuit modulation module. The circuit modulation module includes a DC (direct current) modulation circuit corresponding to the DC modulation mode. The DC modulation circuit is arranged on the DC side of the rectifier. The DC modulation circuit includes a DC modulation impedance and a DC modulation switch connected in series with the DC modulation impedance. The DC modulation switch is configured to control the connection state of the DC modulation impedance to the rectifier. The rectifier is connected to an AC power supply in a wireless manner, rectifies the AC (alternating current) power supply, and outputs a DC voltage. The controller of the receiving end module is connected to the rectifier and is configured to control the output port of the receiving end module to output a first output voltage by turning on the DC modulation switch when the DC modulation circuit meets a preset DC modulation condition. The battery connected to the receiving end module is wirelessly charged under the first output voltage, wherein the first output voltage is less than the DC voltage output by the rectifier. The DC modulation switch, in an on state, enables the DC modulation impedance to be connected to the DC modulation circuit.

In conjunction with the first aspect, the embodiments of the present disclosure provide a first possible implementation of the first aspect, wherein the above wireless charging system further includes a transmitting end module configured for connecting to a DC power supply, converting the DC power supply into an AC power supply, and coupling the AC power supply to the receiving end module.

In conjunction with the first aspect, the embodiments of the present disclosure provide a second possible implementation of the first aspect, wherein the above circuit modulation module further includes an AC modulation circuit corresponding to the AC modulation mode. The AC modulation circuit is arranged on the AC side of the rectifier. The AC modulation circuit includes an AC modulation impedance and an AC modulation switch connected in series with the AC modulation impedance. The AC modulation switch is configured to control the connection state of the AC modulation impedance to the rectifier.

In conjunction with the first possible implementation of the first aspect, the embodiments of the present disclosure provide a third possible implementation of the first aspect, wherein the above preset DC load modulation condition that the DC modulation circuit satisfies includes the following. A wireless communication is built by the transmitting end module and the receiving end module, and the DC modulation switch is in an off state, wherein the disconnected DC modulation switch cuts off the DC modulation impedance from the DC modulation circuit.

In conjunction with the first possible implementation of the first aspect, the embodiments of the present disclosure provide a fourth possible implementation of the first aspect, wherein the above step in which the receiving end module controls the output port of the receiving end module to output the first output voltage by turning on the DC modulation switch includes: building a wireless communication by the receiving end module and the transmitting end module, and controlling, before the receiving end module sends a communication signal to the transmitting end module, the receiving end module to perform a drop detection test process at least once until a difference value between the voltage output by the rectifier of the receiving end module and the voltage output by the output port of the receiving end module meets a preset threshold; determining the voltage output by the output port of the receiving end module as the first output voltage; controlling the receiving end module to send a communication signal to the transmitting end module, and controlling the output port of the receiving end module to output the first output voltage when sending the communication signal, wherein the process of the drop detection test includes: controlling the DC modulation switch to switch to the on state; recording the voltage output by the output port of the receiving end module in the on state, and turning off the DC modulation switch; controlling the DC modulation switch to switch to the on state again at a preset time interval, and controlling the output port of the receiving end module to output the recorded voltage; monitoring a difference value between the voltage output by the rectifier of the receiving end module and the voltage output by the output port; stopping, if the difference value meets the preset threshold, the drop detection test process; and re-determining, if the difference value does not meet the preset threshold, the voltage output by the output port until the difference value meets the preset threshold.

In conjunction with the first aspect, the embodiments of the present disclosure provide a fifth possible implementation of the first aspect. The above controller is further configured for: obtaining the pre-recorded reference output voltage, wherein the reference output voltage is the recorded voltage value output by the receiving end module when the DC modulation switch is switched to the on state at the first time; determining the reference output voltage as the first output voltage; and controlling the receiving end module to output the first output voltage.

In conjunction with the first aspect, the embodiments of the present disclosure provide a sixth possible implementation of the first aspect, wherein the above wireless charging system further includes a voltage regulator arranged on the DC side of the rectifier. The controller is further configured to control the output port to output the first output voltage by controlling the voltage regulator.

In a second aspect, the embodiments of the present disclosure further provide a wireless charging method. The method is applied to the wireless charging system in the first aspect, and the method includes: determining, in response to building a wireless communication by the receiving end module and the transmitting end module of the wireless charging system, whether the DC modulation circuit corresponding to the receiving end module meets the preset DC load modulation condition; controlling, if so, the output port of the receiving end module to output the first output voltage by turning on the DC modulation switch, wherein the first output voltage is less than the DC voltage output by the rectifier, and the DC modulation switch, in an on state, enables the DC modulation impedance to be connected to the DC modulation circuit; and wirelessly charging the battery connected to the receiving end module at the first output voltage.

In conjunction with the second aspect, the embodiments of the present disclosure provide a first possible implementation of the second aspect, wherein the above preset DC load modulation condition that the DC modulation circuit satisfies includes the following. A wireless communication is built by the transmitting end module and the receiving end module, and the DC modulation switch is in an off state, wherein the disconnected DC modulation cuts off the DC modulation impedance from the DC modulation circuit.

In conjunction with the second aspect, the embodiments of the present disclosure provide a second possible implementation of the second aspect, wherein the above step of controlling the output port of the receiving end module to output the first output voltage by turning on the DC modulation switch includes: controlling, before the receiving end module sends a communication signal to the transmitting end module, the receiving end module to perform a drop detection test process at least once until a difference value between the voltage output by the rectifier of the receiving end module and the voltage output by the output port of the receiving end module meets a preset threshold; determining the voltage output by the output port of the receiving end module as the first output voltage; controlling the receiving end module to send a communication signal to the transmitting end module, and controlling the output port of the receiving end module to output the first output voltage when sending the communication signal, wherein the process of the drop detection test includes: controlling the DC modulation switch to switch to the on state; recording the voltage output by the output port of the receiving end module in the on state, and turning off the DC modulation switch; controlling the DC modulation switch to switch to the on state again at a preset time interval, and controlling the output port of the receiving end module to output the recorded voltage; monitoring a difference value between the voltage output by the rectifier of the receiving end module and the voltage output by the output port; stopping, if the difference value meets the preset threshold, the drop detection test process; and re-determining, if the difference value does not meet the preset threshold, the voltage output by the output port until the difference value meets the preset threshold.

In conjunction with the second aspect, the embodiments of the present disclosure provide a third possible implementation of the second aspect, wherein the above step of controlling the output port of the receiving end module to output the first output voltage by turning on the DC modulation switch further includes: obtaining the pre-recorded reference output voltage, wherein the reference output voltage is the recorded voltage value output by the receiving end module when the DC modulation switch is switched to the on state at the first time; determining the reference output voltage as the first output voltage; and controlling the output port of the receiving end module to output the first output voltage.

In conjunction with the second aspect, the embodiments of the present disclosure provide a fourth possible implementation of the second aspect, wherein the above method further includes: switching, in response to the disconnection of the wireless communication between the receiving end module and the transmitting end module of the wireless charging system, the DC modulation switch to the off state; or, switching, in response to the completion of wireless charging of the battery connected to the receiving end module, the DC modulation switch to the off state.

In conjunction with the third possible implementation of the second aspect, the embodiments of the present disclosure provide a fifth possible implementation of the second aspect, wherein the above step of the receiving end module sending a communication signal to the transmitting end module includes: controlling the DC modulation switch to switch between the off state and the on state at a preset time period to maintain wireless communication between the transmitting end module and the receiving end module.

In conjunction with the first possible implementation of the second aspect, the embodiments of the present disclosure provide a sixth possible implementation of the second aspect, wherein the above method further includes: determining that, if a wireless communication is built by the transmitting end module and the receiving end module and the DC modulation switch is in the on state, the DC modulation circuit does not meet the preset DC load modulation condition; or, determining that, if the load modulation mode of the receiving end module is in the AC modulation mode, the DC modulation circuit does not meet the preset DC load modulation condition.

In conjunction with the sixth possible implementation of the second aspect, the embodiments of the present disclosure provide a seventh possible implementation of the second aspect, wherein the above method further includes: determining, if the load modulation mode of the receiving end module is in the AC modulation mode, whether the current output voltage of the rectifier and the output voltage of the output port of the receiving end module are in a decoupled state; controlling, if so, the AC modulation switch to switch between the off state and the on state at a preset time period to maintain wireless communication between the transmitting end module and the receiving end module; and modulating, if not, the modulation direction of the output voltage of the rectifier, and controlling the AC modulation switch to switch between the off state and the on state at a preset time period to maintain wireless communication between the transmitting end module and the receiving end module.

In conjunction with the seventh possible implementation of the second aspect, the embodiments of the present disclosure provide an eighth possible implementation of the second aspect, wherein the above method further includes: obtaining, if the output voltage of the rectifier and the output voltage of the output port of the receiving end module are in a non-decoupled state, a pre-configured second output voltage, and controlling the output port of the receiving end module to output the second output voltage to wirelessly charge the battery connected to the receiving end module, wherein the second output voltage is less than the output voltage of the rectifier, and the difference value between the second output voltage and the output voltage of the rectifier is greater than the preset threshold.

In a third aspect, the embodiments of the present disclosure further provide an electronic device, wherein the electronic device is provided with the wireless charging system in the first aspect, and the battery of the electronic device is a rechargeable battery. The battery is connected to the output port of the receiving end module of the wireless charging system.

The embodiments of the present disclosure offer beneficial effects as follows.

The wireless charging system, the method, and the electronic device are provided by the embodiments of the present disclosure. A circuit modulation module is arranged on the rectifier of the receiving end module of the wireless charging system, and a DC modulation circuit corresponding to the DC modulation mode is included in the circuit modulation module. When the DC modulation circuit meets a preset DC modulation condition, by turning on the DC modulation switch, the output port of the receiving end module can be controlled to output a first output voltage, so that the battery connected to the receiving end module is wirelessly charged under the first output voltage. Additionally, the above first output voltage is less than the DC voltage output by the rectifier. In this way, when the signal transmission is realized by implementing the load modulation on the DC side of the rectifier, it can avoid fluctuations in the output voltage of the output port of the receiving end module along with the DC voltage output by the rectifier, thereby ensuring the output power of the receiving end module and improving the efficiency of the use of the wireless charging system.

Other features and advantages of the present disclosure will be set forth in the subsequent specification and, in part, become apparent from the specification or are understood by implementing the present disclosure. The objective and other advantages of the present disclosure are achieved and obtained in the structure specifically indicated in the specification, the claims, and the drawings.

To make the above objectives, features, and advantages of the present disclosure more evident and comprehensible, the following preferred embodiments are described in detail with the drawings.

### BRIEF DESCRIPTION OF DRAWINGS

In order to more clearly illustrate the specific embodiments of the present disclosure or the technical solution in the prior art, the drawings required to be used in the description of the specific embodiment or prior art will be briefly introduced as follows. Obviously, for the drawings described below are some embodiments of the present disclosure, those of skilled in the art, without paying inventive labor, may also obtain other drawings according to these drawings.
FIG. 1 is a structural block diagram of a wireless charging system;
FIG. 2 is a structural block diagram of a wireless charging system provided in an embodiment of the present disclosure;
FIG. 3 is a structural block diagram of another wireless charging system provided in an embodiment of the present disclosure;
FIG. 4 is a schematic diagram of voltage fluctuations under load modulation provided in an embodiment of the present disclosure;
FIG. 5 is a schematic diagram of an AC modulation method provided in an embodiment of the present disclosure;
FIG. 6 is a schematic diagram of voltage fluctuations under the AC modulation method provided in an embodiment of the present disclosure;
FIG. 7 is a schematic diagram of a DC modulation method provided in an embodiment of the present disclosure;
FIG. 8 is a schematic diagram of voltage fluctuations in a drop detection test provided in an embodiment of the present disclosure; and
FIG. 9 is a flowchart of a wireless charging method provided in an embodiment of the present disclosure.

Reference numerals: 10 - transmitting end module; 20 - receiving end module; 101 - inverter; 201 - rectifier; 301 - voltage regulator.

### DETAILED DESCRIPTION OF EMBODIMENTS

In order to clarify the objectives, technical solutions, and advantages of the embodiments of the present disclosure, a clear and complete description of the technical solutions of the present disclosure will be provided below in conjunction with the drawings. It is evident that the described embodiments are part of the embodiments of the present disclosure and not the entirety of the embodiments. Based on the embodiments in the present disclosure, all other embodiments obtained by those skilled in the art without making inventive efforts are within the scope of protection of the present disclosure.

Currently, with the rapid development of wireless charging technology, more and more smart devices or smart terminals are adopting wireless charging technology, such as smartphones, earphones, beauty instruments, and even small household appliances. The wireless charging process can refer to the structural block diagram of the wireless charging system shown in FIG. 1. During wireless charging, the transmitting end module and receiving end module of the wireless charging system often use load modulation to change the impedance of the receiving end module, thus achieving signal transmission.

However, during the load modulation process, the output voltage of the output port of the receiving end module tends to fluctuate along with the output voltage of the rectifier, which means that the output voltage of the output port of the receiving end module is "not decoupled" from the output voltage of the rectifier. In this not-decoupled phenomenon, load modulation could cause the following possible issues.
(1) During modulation, the output voltage of the output port of the receiving end module fluctuates, which means that the entire output power of the receiving end module could fluctuate. This could affect the quality of the load modulation. For example, load modulation itself is going to increase the output power of the rectifier, but fluctuations in the load may cause a decrease in the output power of the receiving end module, so that the two are offset and the depth of the load modulation is weakened.
(2) The noise from the load connected to the output port of the receiving end module can more easily enter the modulation signal due to the lack of decoupling, thereby affecting communication between the transmitting end module and the receiving end module.

In view of this, the embodiments of the present disclosure provide a wireless charging system, a method, and an electronic device that can effectively solve the decoupling problem aforementioned, thereby improving the efficiency of the use of the wireless charging system.

To facilitate understanding, the embodiment will first provide a detailed description of the wireless charging system disclosed in the present disclosure.

In one possible embodiment, the embodiment of the present disclosure provides a wireless charging system, wherein the wireless charging system includes a receiving end module. The rectifier of the receiving end module is provided with a circuit modulation module, wherein the circuit modulation module includes a DC modulation circuit corresponding to the DC modulation mode. The DC modulation circuit is arranged on the DC side of the rectifier.

Further, the DC modulation circuit includes a DC modulation impedance and a DC modulation switch connected in series with the DC modulation impedance. The DC modulation switch is configured to control the connection state of the DC modulation impedance to the rectifier.

For ease of understanding, FIG. 2 shows a structural block diagram of the wireless charging system. For ease of explanation, FIG. 2 only shows the rectifier 201, the coil T2, the resonant capacitor Cs of the receiving end module, and the DC modulation impedance Z1 and the DC modulation switch S1 which are included in the DC modulation circuit. The DC modulation impedance Z1 and the DC modulation switch S1 are connected in series and arranged on the DC side of rectifier 201.

When implemented, the rectifier is connected to an AC power supply in a wireless manner, rectifies the AC power supply, and outputs a DC voltage. For example, the AC power supply is obtained from the transmitting end module via coil coupling and then rectified for output. Therefore, the wireless charging system in the embodiments of the present disclosure further includes a transmitting end module, which is configured to connect to a DC power supply, and the transmitting end module includes an inverter, which can convert the DC power supply into an AC power supply and couple the AC power supply to the receiving end module.

Additionally, in the embodiments of the present disclosure, the controller of the receiving end module (not shown in FIG. 2) is connected to the rectifier and is configured to control the output port of the receiving end module to output a first output voltage by turning on the DC modulation switch when the DC modulation circuit meets a preset DC modulation condition. The battery connected to the receiving end module is wirelessly charged under the first output voltage.

The rectifier of the receiving end module can use a PRx rectifier, and the inverter of the transmitting end module can use a PTx inverter. The specific models and parameters of the rectifier and the inverter can be set according to the actual usage. The present disclosure does not limit this.

Further, the battery connected to the receiving end module corresponds to the load connected to the receiving end module.

Moreover, the first output voltage in the embodiments of the present disclosure is less than the DC voltage output by the rectifier. The DC modulation switch, in an on state, enables the DC modulation impedance to be connected to the DC modulation circuit. When the output port of the receiving end module outputs the first output voltage, the controller of the above receiving end module can control the DC modulation switch to switch between the off state and the on state at a preset time period so as to change the impedance on the DC side of the rectifier, thereby maintaining wireless communication between the transmitting end module and the receiving end module. That is, by changing the impedance, signal transmission during the wireless charging process can be achieved.

In practical use, the structural block diagram of the wireless charging system shown in FIG. 2 illustrates that the impedance change of the receiving end module occurs on the DC side of the rectifier. For example, in FIG. 2, the DC modulation impedance Z1 is switched by controlling the DC modulation switch S1, and this method can be referred to as the DC modulation mode. However, the impedance change can also occur on the AC side of the rectifier, i.e., the AC modulation mode, or a combination of the DC side and the AC side can be used.

Specifically, to facilitate understanding, based on FIG. 2, FIG. 3 also shows a structural block diagram of another wireless charging system. In addition to the DC modulation circuit shown in FIG. 2, the circuit modulation module in the embodiments of the present disclosure also includes an AC modulation circuit corresponding to the AC modulation mode. The AC modulation circuit is arranged on the AC side of rectifier 201. As shown in FIG. 3, the AC modulation circuit includes an AC modulation impedance Z2 and an AC modulation switch S2 connected in series with the AC modulation impedance Z2. The AC modulation switch S2 is configured to control the connection state of the AC modulation impedance Z2 to the rectifier 201. In other words, the AC modulation switch S2 is configured to switch the aforementioned AC modulation impedance Z2.

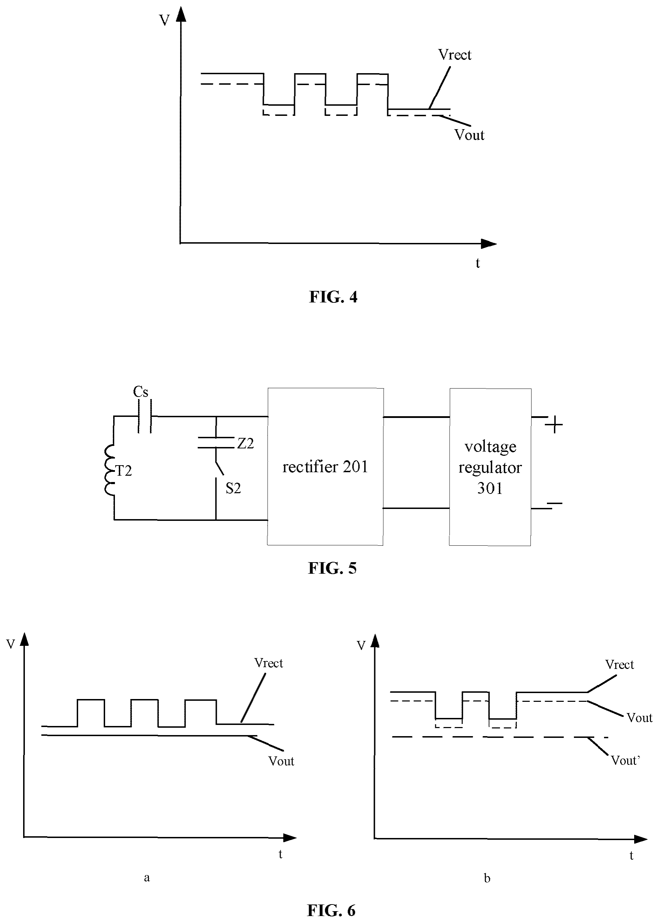

Typically, both the DC modulation mode and the AC modulation mode mentioned above will cause fluctuations in the output voltage of the rectifier. Specifically, FIG. 4 also shows a schematic diagram of voltage fluctuations under load modulation, where the abscissa t represents time, such as the charging time of the wireless charging system, the ordinate V represents voltage, Vrect represents the output voltage of the rectifier, and Vout represents the output voltage of the output port of the receiving end module, i.e., the voltage configured to charge the load. Specifically, FIG. 3 also shows the output positions of the output voltage Vrect of the rectifier and the output voltage Vout of the output port of the receiving end module, and Vrect usually is higher than or equal to Vout.

Further, in FIG. 4, the solid line represents Vrect, and the dashed line represents Vout. Typically, the voltage difference between Vrect and Vout is controlled to be small. However, as shown in FIG. 4, if an appropriate control method is not adopted, Vout will fluctuate along with Vrect during load modulation. This simultaneous fluctuation is referred to as "not decoupled" between Vrect and Vout. However, in the embodiments of the present disclosure, when the DC modulation circuit meets a preset DC modulation condition, by turning on the DC modulation switch, the output port of the receiving end module can be controlled to output a first output voltage, so that the battery connected to the receiving end module is wirelessly charged under the first output voltage. Moreover, since the first output voltage is less than the DC voltage output by the rectifier, in this way, when signal transmission is realized by implementing the load modulation on the DC side of the rectifier, it can avoid fluctuations in the output voltage of the output port of the receiving end module along with the DC voltage output by the rectifier, thereby ensuring the output power of the receiving end module and improving the efficiency of the use of the wireless charging system.

In practical use, the aforementioned wireless charging system further includes a voltage regulator arranged on the DC side of the rectifier. Additionally, FIG. 3 further shows voltage regulator 301. The controller of the above receiving end module is also configured to control the output port to output the first output voltage by controlling the voltage regulator 301. Typically, the voltage regulator is arranged between the DC side of the rectifier and the output port of the receiving end module, to facilitate the regulation of the output voltage of the output port by controlling the voltage regulator. That is, in FIG. 3, after the output voltage Vrect of the rectifier is regulated by the voltage regulator, Vout is output, which means that the output voltage of the output port is obtained.

Typically, the output voltage Vout of the output port is less than Vrect, and the voltage difference between Vrect and Vout is controlled to be relatively small. A feature is that when the voltage regulator uses a low drop out (LDO) regulator, the loss of the voltage regulator can be reduced. However, if the above control method provided in the embodiments of the present disclosure-wherein the output port of the receiving end module outputs the first output voltage by turning on the DC modulation switch when the DC modulation circuit meets a preset DC modulation condition-is not adopted, Vout will fluctuate along with Vrect during the load modulation process.

Moreover, whether using the DC modulation mode or the AC modulation mode, Vout will fluctuate along with Vrect, i.e., a non-decoupled state.

For example, FIG. 5 shows a schematic diagram of the AC modulation mode. For ease of explanation, FIG. 5 only shows the AC modulation switch S2, the AC modulation impedance Z2, the rectifier 201, and the voltage regulator 301. The AC modulation impedance Z2 typically adopts capacitive impedance, and by controlling AC modulation switch S2, the capacitive impedance connected in series with it can be switched, thereby achieving load modulation on the AC side.

Further, FIG. 6 shows a schematic diagram of voltage fluctuations under the AC modulation mode, i.e., the possible fluctuations of Vrect caused by the modulation of the capacitive impedance in FIG. 5.

It should be noted that, since capacitive modulation is a reactive power modulation, the fluctuation direction of Vrect mentioned above can be upward (i.e., Vrect fluctuates upward when AC modulation switch S2 is turned on), as shown in a of FIG. 6. The fluctuating curve is the fluctuation curve of Vrect, where the upwardly protruding portions represent the fluctuations of Vrect when AC modulation switch S2 is in the on state, and the downward recessed portions represent the fluctuations of Vrect when AC modulation switch S2 is in the off state, meaning that Vrect always fluctuates upward. However, the fluctuation direction of Vrect can be downward (i.e., Vrect fluctuates downward when AC modulation switch S2 is turned on), as shown in b of FIG. 6. In b of FIG. 6, the solid line represents Vrect, and the dashed line represents Vout. It should be understood that FIG. 6 only shows the toggling of AC modulation switch S2 in several times of communication, and communication packets are sent to the transmitting end module through the toggling of AC modulation switch S2.

As can be seen from FIG. 6, if it fluctuates upward, Vout remains stable without changing with Vrect, where this state is referred to as decoupling between Vrect and Vout. This is an ideal situation, corresponding to a of FIG. 6. However, b of FIG. 6 represents the non-decoupled state mentioned above, where the voltage difference between Vrect and Vout is small, and Vout fluctuates along with Vrect. Typically, for the aforementioned modulation method on the AC side, the commonly adopted solutions to achieve stable Vout output are as follows.
(1) The voltage difference between Vrect and Vout is increased. For example, Vout is set to Vout' as shown in b of FIG. 6, so that Vout' can remain unchanged when Vrect fluctuates. The disadvantage of the method is that the voltage difference between Vout' and Vrect is relatively large, resulting in high losses when the voltage regulator uses an LDO regulator.
(2) The modulation direction of Vrect is changed, so that it always fluctuates upward during modulation. For example, during each wireless charging process, it is first detected that the modulation direction of Vrect. If the fluctuation direction of Vrect is upward, wireless charging can proceed directly, and communication packets can be sent by changing the impedance. However, if the fluctuation direction of Vrect is downward, the state of the AC modulation switch S2 can be toggled before starting wireless charging, such as switching from the off state to the on state, or from the on state to the off state, to change the modulation direction.

For the DC modulation method, the above wireless charging system in the embodiments of the present disclosure solves the issue of non-decoupling by a manner of controlling the output port of the receiving end module to output the first output voltage through the switching on of the DC modulation switch when the DC modulation circuit meets the preset DC modulation conditions, thereby avoiding the situation where Vout fluctuates along with Vrect during load modulation.

In a specific implementations, the above DC modulation impedance in the embodiments of the present disclosure can be a resistor or a current source. Of course, other forms of impedance, such as a combination of resistors and current sources, can also be used. For example, in one application scenario of the embodiment, if all electronic components are resistors, the resistors can be used as the DC modulation impedance. In another application scenario of the embodiment where a current source is suitable, a current source can be used as the DC modulation impedance. The actual implementation depends on the specific usage situation, and the embodiments of the present disclosure do not impose any limitations herein.

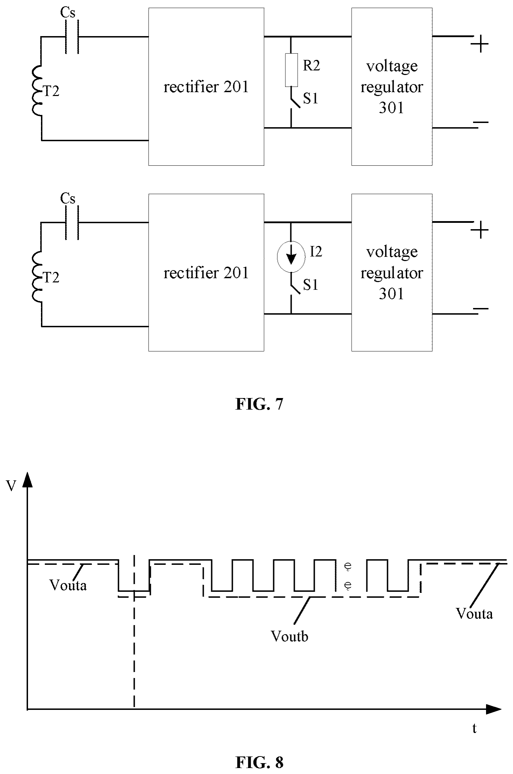

Furthermore, FIG. 7 shows a schematic diagram of the DC modulation method, illustrating the embodiments where the DC modulation impedance is a resistor and a current source, i.e., DC resistance modulation and DC current modulation. For ease of explanation, FIG. 7 only shows a schematic diagram of the DC modulation method, which includes DC modulation switch S1 and DC modulation impedance. The DC modulation impedance is represented as the resistor R2 or the current source I2, i.e., the modulation resistor or the modulation current source. Additionally, FIG. 7 also shows the rectifier 201 and the voltage regulator 301.

In a specific implementations, unlike the reactive power modulation in the AC modulation method, the DC modulation method in the embodiments of the present disclosure is an active power modulation, where the modulation direction of Vrect always fluctuates downward, meaning that only the downward fluctuation of Vrect shown in b of FIG. 6 occurs, without the upward fluctuation of Vrect shown in a of FIG. 6.

For example, after the DC modulation switch S1 controls the connection of the DC modulation impedance to the DC modulation circuit, the modulation direction of Vrect fluctuates downward. That is, after the DC modulation impedance is connected, the output voltage Vrect of the rectifier and the output voltage Vout of the output port of the receiving end module are lowered.

For the aforementioned DC modulation method of the embodiments of the present disclosure, by pre-configuring the DC load modulation conditions, the output port of the receiving end module can be controlled to output the first output voltage through the switching on of the DC modulation switch when the DC modulation circuit meets the preset DC modulation conditions, thereby wirelessly charging the battery connected to the receiving end module under the first output voltage.

Specifically, the preset DC load modulation conditions met by the DC modulation circuit in the embodiments of the present disclosure include the building of wireless communication between the transmitting end module and the receiving end module, and the DC modulation switch being in the off state, wherein the DC modulation switch in the off state cuts off the DC modulation impedance from the DC modulation circuit.

The building of wireless communication between the transmitting end module and the receiving end module refers to the fact that before charging the battery, the transmitting end module and the receiving end module first build a wireless communication; then, the receiving end module further determines whether its DC modulation circuit meets the preset DC load modulation condition above. If the preset DC load modulation condition is met, the output port of the receiving end module is controlled to output the first output voltage.

In actual use, the above DC load modulation condition in the embodiment of the present disclosure refers to a scenario where, before the transmitting end module and the receiving end module build a wireless communication, the DC modulation switch cuts off the DC modulation impedance from the DC modulation circuit. If, before the transmitting end module and the receiving end module build a wireless communication, the DC modulation switch controls the DC modulation impedance to connect the DC modulation circuit, this enables a modulation direction where Vrect fluctuates upward.

That is to say, after the DC modulation impedance is connected to the DC modulation circuit in advance, the output voltage of the rectifier, Vrect, and the output voltage of the output port of the receiving end module, Vout, are first lowered. In this way, during load modulation, once the DC modulation impedance is disconnected from the DC modulation circuit, the output voltage Vrect and the output voltage Vout of the output port of the receiving end module increase due to the increased equivalent impedance at the output end of the rectifier, i.e., an upward fluctuation of Vrect and Vout, i.e., an upward modulation direction for Vrect and a stable output of Vout. Although this method decouples Vrect from Vout, the DC modulation impedance is controlled to connect to the DC modulation circuit in advance, which leads to the default state of the DC modulation switch S1 remaining "on" all the time. In other words, the DC modulation switch S1 stays in the on state, causing the DC modulation impedance in FIG. 7 (the resistor R2 or the current source I2) to be connected to the wireless charging system in the long term. This leads to additional energy loss.

To avoid the above additional energy loss, the above DC load modulation condition in the embodiments of the present disclosure is configured such that the DC modulation switch is in the off state. In the default state, the DC modulation switch is controlled to cut off the DC modulation impedance from the DC modulation circuit.

After the transmitting end module and the receiving end module build a wireless communication, the DC modulation switch S1 can be turned on. In other words, the DC modulation switch S1 is controlled to switch to the on state, allowing the DC modulation impedance to be connected to the DC modulation circuit. Then, when starting charging, the DC modulation switch is controlled to switch between the off state and the on state at a preset time period. In other words, the DC modulation switch S1 is controlled to switch between ON and OFF to change the impedance on the DC side of the rectifier. Therefore, the signal transmission during wireless charging is achieved by changing the impedance.

Moreover, since the DC modulation impedance is not connected before the transmitting end module and the receiving end module build the wireless communication, when the DC modulation switch S1 is switched to the on state and the DC modulation impedance is connected to the DC modulation circuit, due to the connection of the DC modulation impedance, a phenomenon of Vrect fluctuating downward occurs, and at the same time, Vout fluctuates downward synchronously with Vrect. Assuming that Vout fluctuates downward to Voutb, at this time, the controller of the receiving end module can record the Voutb and maintain Voutb throughout the entire communication process. After the wireless communication is completed, the controller of the receiving end module can reset Vout to Vouta, which is the value of Vout before it fluctuated downward synchronously with Vrect, and can also be referred to as the initial value of Vout. Since Vout is constantly maintained to output the Voutb during the wireless charging process, there will be no case where Vout fluctuates downward synchronously with Vrect, thereby avoiding the aforementioned non-decoupling phenomenon.

Therefore, the above-mentioned Voutb represents the drop value of Vout during downward fluctuation, or the lowest drop value of Vout during downward fluctuation, and the above-mentioned first output voltage in the embodiment of the present disclosure is determined based on the drop value Voutb. For example, the first output voltage can be directly set as Voutb or be lower than Voutb.

Thus, in the embodiments of the present disclosure, the aforementioned first output voltage can be set by sampling after the DC modulation switch S1 is turned on for the first time before the transmitting end module and the receiving end module build a wireless communication, and Vout drops and stabilizes, or a relatively low value can be selected based on an empirical value so that there is sufficient margin. The empirical value can be the value related to the load size and coil coupling. Moreover, the aforementioned controller of the receiving end module in the embodiments of the present disclosure is further configured for obtaining the pre-recorded reference output voltage, wherein the reference output voltage is the recorded voltage value output by the receiving end module when the DC modulation switch is switched to the on state at the first time, for example, Voutb aforementioned; determining the reference output voltage as the first output voltage; and controlling the receiving end module to output the first output voltage.

In actual use, in order to increase the stability of the above-mentioned DC modulation method in the embodiments of the present disclosure, that is, to obtain a more appropriate first output voltage during each wireless charging, the embodiments of the present disclosure can further perform a Vout drop detection test before the receiving end module communicates with the transmitting end module and sends a packet. The drop detection test includes building a wireless communication by the receiving end module and the transmitting end module, and controlling, before the receiving end module sends a communication signal to the transmitting end module, the receiving end module to perform a drop detection test process at least once until a difference value between the voltage output by the rectifier of the receiving end module and the voltage output by the output port of the receiving end module meets a preset threshold; determining the voltage output by the output port of the receiving end module as the first output voltage; controlling the receiving end module to send a communication signal to the transmitting end module; and controlling the output port of the receiving end module to output the first output voltage when sending the communication signal.

The process of the drop detection test includes
(1) controlling the DC modulation switch to switch to the on state; recording the voltage output by the output port of the receiving end module in the on state at this time, and turning off the DC modulation switch;
(2) controlling the DC modulation switch to switch to the on state again at a preset time interval, and controlling the output port of the receiving end module to output the previously recorded voltage;
(3) monitoring a difference value between the voltage output by the rectifier of the receiving end module and the voltage output by the output port at this time;
(4) stopping, if the difference value meets the preset threshold, the drop detection test process; and if the difference value does not meet the preset threshold, which exceeds the preset threshold typically, re-determining the voltage output by the output port until the difference value meets the preset threshold. For example, the voltage output by the output port of the receiving end module in the on state can be re-recorded, or the previously recorded voltage can be appropriately increased or decreased.

For ease of understanding, FIG. 8 illustrates a schematic diagram of voltage fluctuation in a drop detection test. As shown in FIG. 8, Vrect is represented by a solid line, and Vout is represented by a dashed line.

Assuming that the default DC modulation switch S1 is in the off state when the receiving end module and the transmitting end module are not in communication, and the DC modulation impedance disconnects the DC modulation circuit, at this time, as shown in FIG. 8, the output value of Vout is Vouta. Before the receiving end module and the transmitting end module build the wireless communication and the communication packet is sent, the DC modulation switch S1 is turned on for a period of time, as shown by the drop interval corresponding to the vertical dashed line in FIG. 8, which can also be referred to as "Try ON," serving as the "attempted communication" phase. Since the DC modulation switch S1 is turned on and the DC modulation impedance is connected, at this time, Vout descends along with Vrect. During the Try ON period, when Vout stabilizes, the controller of the receiving end module can detect the value of Vout and record it.

It should be understood that FIG. 8 merely shows a schematic diagram of several times of communication, and the specific duration of communication depends on actual usage, and the embodiments of the present disclosure do not impose any limitation herein.

After the receiving end module and the transmitting end module build the wireless communication, and before formally sending the communication packet, the controller of the receiving end module proactively sets Vout to the value recorded during the aforementioned "Try ON" or the value slightly lower than the recorded value (meeting a certain margin), i.e., Voutb as shown in FIG. 8. Moreover, Voutb is maintained throughout the communication process. After the communication is completed, the DC modulation switch S1 is controlled to switch to the default off state, at which time Vout recovers from Voutb to the original Vouta.

It should be noted that FIG. 8 only shows the process of drop detection test once, which is a schematic diagram of a single "Try ON". It should be understood that more than once "Try ON" period can occur. For example, a second time of "Try ON" can be initiated (not shown in FIG. 8). If during the second time of "Try ON," after the controller of the receiving end module turns on S1 and sets Vout to the value recorded during the first time of "Try ON", the controller can monitor Vrect and Vout. If a large difference between Vrect and Vout is detected, and the difference value is greater than the preset difference value, the setting value of Vout can be appropriately adjusted (increased or decreased), and then third time and fourth time of drop detection test processes can be performed. The ultimate goal is to ensure that the determined first output voltage enables the minimum value of Vrect merely slightly higher than Vout during the communication packet transmission process, thereby reducing the loss on the voltage regulator as much as possible.

Thus, through the above process, the embodiments of the present disclosure can effectively solve the problem of Vrect and Vout not being decoupled during the load modulation process, and it also offers the following advantages.
(1) There is no need to increase the voltage difference between Vrect and Vout, thereby avoiding losses caused by an additional voltage difference.
(2) There is no need to continuously connect the DC modulation impedance, such as the modulation resistor or modulation current source shown in FIG. 7, when the receiving end module and the transmitting end module are not communicating, thereby avoiding additional losses caused by the modulation resistor or modulation current source.

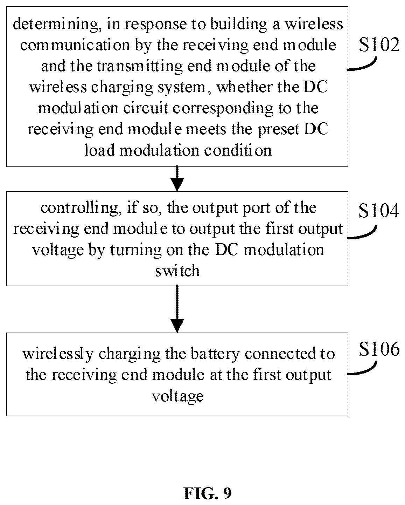

Furthermore, based on the above embodiments, the present disclosure also provides a wireless charging method, wherein the method is applied to the wireless charging system provided in the above embodiments. As shown in the flowchart of a wireless charging method in FIG. 9, the method includes the following steps:
Step S102: determining, in response to building a wireless communication by the receiving end module and the transmitting end module of the wireless charging system, whether the DC modulation circuit corresponding to the receiving end module meets the preset DC load modulation condition;
Step S104: controlling, if so, the output port of the receiving end module to output the first output voltage by turning on the DC modulation switch,
   wherein the first output voltage in the embodiments of the present disclosure is less than the DC voltage output by the above rectifier, and the DC modulation switch, in an on state, enables the DC modulation impedance to be connected to the DC modulation circuit; and
Step S106: wirelessly charging the battery connected to the receiving end module at the first output voltage.

In a specific implementation, the preset DC load modulation conditions met by the DC modulation circuit in the embodiments of the present disclosure include the building of wireless communication between the transmitting end module and the receiving end module, and the DC modulation switch being in the off state, wherein the disconnected DC modulation switch cuts off the DC modulation impedance from the DC modulation circuit.

Specifically, the above step S104 of controlling the output port of the receiving end module to output the first output voltage by turning on the DC modulation switch includes: controlling, before the receiving end module sends a communication signal to the transmitting end module, the receiving end module to perform a drop detection test process at least once until a difference value between the voltage output by the rectifier of the receiving end module and the voltage output by the output port of the receiving end module meets a preset threshold; determining the voltage output by the output port of the receiving end module as the first output voltage; and
controlling the receiving end module to send a communication signal to the transmitting end module; and controlling the output port of the receiving end module to output the first output voltage when sending the communication signal, wherein
the process of the drop detection test includes
controlling the DC modulation switch to switch to the on state; recording the voltage output by the output port of the receiving end module in the on state, and turning off the DC modulation switch; controlling the DC modulation switch to switch to the on state again at a preset time interval, and controlling the output port of the receiving end module to output the recorded voltage; monitoring a difference value between the voltage output by the rectifier of the receiving end module and the voltage output by the output port; stopping, if the difference value meets the preset threshold, the drop detection test process; and re-determining, if the difference value does not meet the preset threshold, the voltage output by the output port until the difference value meets the preset threshold.

Further, the above step S104 of controlling the output port of the receiving end module to output the first output voltage by turning on the DC modulation switch further includes: obtaining the pre-recorded reference output voltage, wherein the reference output voltage is the recorded voltage value output by the receiving end module when the DC modulation switch is switched to the on state at the first time; determining the reference output voltage as the first output voltage; and controlling the receiving end module to output the first output voltage.

Further, in order for the DC modulation circuit to satisfy the preset DC load modulation condition, the embodiment of the present disclosure further can include switching, in response to the disconnection of the wireless communication between the receiving end module and the transmitting end module of the wireless charging system, the DC modulation switch to the off state; or switching, in response to the completion of wireless charging of the battery connected to the receiving end module, the DC modulation switch to the off state.

Further, the above step of the receiving end module sending a communication signal to the transmitting end module includes: controlling the DC modulation switch to switch between the off state and the on state at a preset time period to change the impedance so as to maintain wireless communication between the transmitting end module and the receiving end module;
determining that, if a wireless communication is built by the above transmitting end module and the receiving end module and the DC modulation switch is in the on state, the DC modulation circuit does not meet the preset DC load modulation condition; or determining that, if the load modulation mode of the receiving end module is in the AC modulation mode, the DC modulation circuit does not meet the preset DC load modulation condition; and
determining, if the load modulation mode of the receiving end module is in the AC modulation mode, whether the current output voltage of the rectifier and the output voltage of the output port of the receiving end module are in a decoupled state; controlling, if so, the AC modulation switch to switch between the off state and the on state at a preset time period to maintain wireless communication between the transmitting end module and the receiving end module; and modulating, if not, the modulation direction of the output voltage of the rectifier, and controlling the AC modulation switch to switch between the off state and the on state at a preset time period to maintain wireless communication between the transmitting end module and the receiving end module.

The AC modulation mode corresponds to the AC modulation method shown in the aforementioned FIG. 5 and FIG. 6, and specific details can be referenced from the content corresponding to FIG. 5 and FIG. 6. The embodiments of the present disclosure do not impose any limitation on this.

Further, in the AC modulation mode, if the output voltage of the rectifier and the output voltage of the output port of the receiving end module are in a non-decoupled state, a pre-configured second output voltage is obtained and the output port of the receiving end module is controlled to output the second output voltage to wirelessly charge the battery connected to the receiving end module. The second output voltage is less than the output voltage of the rectifier, and the difference value between the second output voltage and the output voltage of the rectifier is greater than the preset threshold.

In actual use, the controller of the receiving end module in the embodiments of the present disclosure can set the current load modulation mode based on pre-configured conditions. Taking the structural block diagram of the wireless charging system shown in FIG. 3 as an example, when both a DC modulation circuit and an AC modulation circuit are configured in the wireless charging system, the controller of the receiving end module can determine the current load modulation mode based on the configuration information. Furthermore, for the DC modulation circuit, the default state of the DC modulation switch S1 can be further configured. Specifically, the default state of the DC modulation switch can be set to the on state or the off state. If the default state of the DC modulation switch is the off state, the wireless charging method of the embodiments of the present disclosure can be executed. Otherwise, the corresponding load modulation method can be selected for wireless charging based on the actual configuration. The specific settings can be made according to actual use, and the embodiments of the present disclosure do not impose any limitations herein.

Further, the embodiments of the present disclosure further provide an electronic device, wherein the electronic device is provided with the wireless charging system aforementioned, and the battery of the electronic device is a rechargeable battery. The battery is connected to the output port of the receiving end module of the wireless charging system.

The wireless charging method and the electronic device provided by the embodiments of the present disclosure have the same technical features as the wireless charging system provided in the above embodiments, and therefore can solve the same technical problems and achieve the same technical effects.

The computer program product of the wireless charging system, the method, and the electronic device provided by the embodiment of the present disclosure includes a computer-readable storage medium on which a program code is stored. The program code includes instructions that can be used to perform the method described in the previous method embodiment, the specific implementation of which can be found in the method embodiments and will not be repeated herein.

It is clearly understood by those skilled in the field to which it belongs that, for the convenience and brevity of the description, the specific working process of the electronic device described above can be referred to the corresponding process in the preceding embodiments, and will not be repeated herein.

Additionally, in the description of the embodiment of the present disclosure, unless otherwise clearly stipulated and limited, the terms "provide", "communicate", "connect" should be understood in a broad sense. For example, it can be a fixed connection, a detachable connection, or an integral connection; it can be a mechanical connection or an electrical connection; and it can be a direct connection, an indirect connection through an intermediary, or an internal communication between two components. Those skilled in the art can understand the meanings of the above terms in the present disclosure according to specific situations.

The functionality, when implemented as a software functional unit and sold or used as a stand-alone product, can be stored in a computer-readable storage medium. Based on this understanding, the technical solution of the present disclosure can essentially be embodied in the form of a software product, which contributes to or includes parts of the prior art. The software product is stored in a storage medium and includes multiple instructions for causing a computer device (which can be a personal computer, server, network device, etc.) to execute all or some of the steps of the methods described in various embodiments of the present disclosure. The aforementioned storage media include various media that can store program code, such as USB drives, external hard drives, read-only memory (ROM), random access memory (RAM), disks, or optical discs.

In the description of the present disclosure, it should be noted that the terms "center", "top", "bottom", "left", "right", "vertical", "horizontal", "inside", "outside", etc. indicate an orientation or positional relationship based on the orientation or positional relationship shown in the drawings and are intended only to facilitate and simplify the description of the present disclosure, not to indicate or imply that the device or element referred to must have a particular orientation, be constructed and operate in a particular orientation, and therefore are not to be construed as limiting the present disclosure. In addition, the terms "first", "second" and "third" are used for descriptive purposes only and are not to be construed as indicating or implying relative importance.

Finally, it should be noted that the embodiments above are specific implementations of the present disclosure, which are used to illustrate the technical solutions of the present disclosure and are not intended to limit its scope. The scope of protection of the present disclosure is not limited to these embodiments, despite the detailed description of the present disclosure provided in reference to the aforementioned embodiments. It should be understood by those skilled in the art that any person skilled in the art can still make modifications or easily envisage variations to the technical solutions described in the aforementioned embodiments within the technical scope disclosed by the present disclosure. Alternatively, some technical features can be equivalently substituted. These modifications, changes, or substitutions do not depart from the essence of the technical solutions of the embodiments of the present disclosure and its scope. All these should be encompassed within the scope of protection of the present disclosure. Therefore, the scope of protection of the present disclosure should be determined by the scope of protection of the claims.

### Industrial Practicality

The wireless charging system, the method, and the electronic device are provided by the embodiments of the present disclosure. A circuit modulation module is arranged on the rectifier of the receiving end module of the wireless charging system, and a DC modulation circuit corresponding to the DC modulation mode is included in the circuit modulation module. When the DC modulation circuit meets a preset DC modulation condition, by turning on the DC modulation switch, the output port of the receiving end module can be controlled to output a first output voltage, so that the battery connected to the receiving end module is wirelessly charged under the first output voltage. Additionally, the above first output voltage is less than the DC voltage output by the rectifier. In this way, when the signal transmission is realized by proceeding the load modulation on the DC side of the rectifier, it can avoid fluctuations in the output voltage of the output port of the receiving end module along with the DC voltage output by the rectifier, thereby ensuring the output power of the receiving end module and improving the efficiency of the use of the wireless charging system.

## Claims

1. A wireless charging system, **characterized in that** the wireless charging system comprises a receiving end module,
wherein a rectifier of the receiving end module is provided with a circuit modulation module;
the circuit modulation module comprises a DC modulation circuit corresponding to a DC modulation mode; the DC modulation circuit is arranged on a DC side of the rectifier;
the DC modulation circuit comprises a DC modulation impedance and a DC modulation switch connected in series with the DC modulation impedance; the DC modulation switch is configured to control a connection state of the DC modulation impedance to the rectifier;
the rectifier is connected to an AC power supply in a wireless manner, rectifies the AC power supply, and outputs a DC voltage; and
a controller of the receiving end module is connected to the rectifier and is configured to control an output port of the receiving end module to output a first output voltage by turning on the DC modulation switch when the DC modulation circuit meets a preset DC modulation condition; a battery connected to the receiving end module is wirelessly charged under the first output voltage, wherein the first output voltage is less than a DC voltage output by the rectifier; and the DC modulation switch, in an on state, enables the DC modulation impedance to be connected to the DC modulation circuit.

2. The wireless charging system according to claim 1, wherein the wireless charging system further comprises a transmitting end module configured for connecting to a DC power supply, converting the DC power supply into an AC power supply, and coupling the AC power supply to the receiving end module.

3. The wireless charging system according to claim 1, wherein the circuit modulation module further comprises an AC modulation circuit corresponding to an AC modulation mode; the AC modulation circuit is arranged on an AC side of the rectifier; and
the AC modulation circuit comprises an AC modulation impedance and an AC modulation switch connected in series with the AC modulation impedance; and the AC modulation switch is configured to control a connection state of the AC modulation impedance to the rectifier.

4. The wireless charging system according to claim 2, wherein preset DC load modulation conditions met by the DC modulation circuit comprise
a building of wireless communication between the transmitting end module and the receiving end module, and the DC modulation switch being in an off state, wherein the DC modulation switch in the off state cuts off the DC modulation impedance from the DC modulation circuit.

5. The wireless charging system according to claim 2, wherein a step of the receiving end module controlling the output port of the receiving end module to output the first output voltage by turning on the DC modulation switch comprises
building a wireless communication by the receiving end module and the transmitting end module, and controlling, before the receiving end module sends a communication signal to the transmitting end module, the receiving end module to perform a drop detection test process at least once until a difference value between a voltage output by the rectifier of the receiving end module and a voltage output by the output port of the receiving end module meets a preset threshold; determining the voltage output by the output port of the receiving end module as the first output voltage; and
controlling the receiving end module to send the communication signal to the transmitting end module, and controlling the output port of the receiving end module to output the first output voltage when sending the communication signal, wherein
the drop detection test process comprises
controlling the DC modulation switch to switch to an on state; recording a voltage output by the output port of the receiving end module in the on state; and turning off the DC modulation switch;
controlling the DC modulation switch to switch to the on state again at a preset time interval, and controlling the output port of the receiving end module to output the recorded voltage;
monitoring a difference value between a voltage output by the rectifier of the receiving end module and a voltage output by the output port;
stopping, when the difference value meets the preset threshold, the drop detection test process; and
re-determining, when the difference value does not meet the preset threshold, a voltage output by the output port until the difference value meets the preset threshold.

6. The wireless charging system according to claim 1, wherein the controller is further configured for
obtaining a pre-recorded reference output voltage, wherein the reference output voltage is a recorded voltage value output by the receiving end module when the DC modulation switch is switched to the on state at the first time; and
determining the reference output voltage as the first output voltage; and controlling the receiving end module to output the first output voltage.

7. The wireless charging system according to claim 1, wherein the wireless charging system further comprises a voltage regulator arranged on a DC side of the rectifier; and the controller is further configured to control the output port to output the first output voltage by controlling the voltage regulator.

8. A wireless charging method, **characterized in that** the method is applied to the wireless charging system according to any one of claims 1 to 7, wherein the method comprises:
determining, in response to building a wireless communication by the receiving end module and the transmitting end module of the wireless charging system, whether the DC modulation circuit corresponding to the receiving end module meets preset DC load modulation conditions;
controlling, when meeting, the output port of the receiving end module to output the first output voltage by turning on the DC modulation switch, wherein the first output voltage is less than a DC voltage output by the rectifier, and the DC modulation switch, in an on state, enables the DC modulation impedance to be connected to the DC modulation circuit; and
wirelessly charging a battery connected to the receiving end module at the first output voltage.

9. The wireless charging method according to claim 8, wherein the preset DC load modulation conditions met by the DC modulation circuit comprise
a building of wireless communication between the transmitting end module and the receiving end module, and the DC modulation switch being in an off state, wherein the disconnected DC modulation switch cuts off the DC modulation impedance from the DC modulation circuit.

10. The wireless charging method according to claim 8, wherein a step of controlling the output port of the receiving end module to output the first output voltage by turning on the DC modulation switch comprises
controlling, before the receiving end module sends a communication signal to the transmitting end module, the receiving end module to perform a drop detection test process at least once until a difference value between a voltage output by the rectifier of the receiving end module and a voltage output by the output port of the receiving end module meets a preset threshold; determining the voltage output by the output port of the receiving end module as the first output voltage; and
controlling the receiving end module to send the communication signal to the transmitting end module, and controlling the output port of the receiving end module to output the first output voltage when sending the communication signal, wherein
the drop detection test process comprises
controlling the DC modulation switch to switch to an on state; recording a voltage output by the output port of the receiving end module in the on state, and turning off the DC modulation switch;
controlling the DC modulation switch to switch to the on state again at a preset time interval, and controlling the output port of the receiving end module to output the recorded voltage;
monitoring a difference value between a voltage output by the rectifier of the receiving end module and a voltage output by the output port;
stopping, when the difference value meets the preset threshold, the drop detection test process; and
re-determining, when the difference value does not meet the preset threshold, a voltage output by the output port until the difference value meets the preset threshold.

11. The wireless charging method according to claim 8, wherein a step of controlling the output port of the receiving end module to output the first output voltage by turning on the DC modulation switch further comprises
obtaining a pre-recorded reference output voltage, wherein the reference output voltage is a recorded voltage value output by the receiving end module when the DC modulation switch is switched to the on state at the first time; and
determining the reference output voltage as the first output voltage; and controlling the output port of the receiving end module to output the first output voltage.

12. The wireless charging method according to claim 8, wherein the method further comprises
switching, in response to a disconnection of the wireless communication between the receiving end module and the transmitting end module of the wireless charging system, the DC modulation switch to an off state;
or,
switching, in response to a completion of wireless charging of the battery connected to the receiving end module, the DC modulation switch to the off state.

13. The wireless charging method according to claim 10, wherein a step of the receiving end module sending the communication signal to the transmitting end module comprises:
controlling the DC modulation switch to switch between the off state and the on state at a preset time period to maintain the wireless communication between the transmitting end module and the receiving end module.

14. The wireless charging method according to claim 9, wherein the method further comprises
determining that, when the wireless communication is built by the transmitting end module and the receiving end module and the DC modulation switch is in the on state, the DC modulation circuit does not meet the preset DC load modulation conditions; or,
determining that, when a load modulation mode of the receiving end module is in an AC modulation mode, the DC modulation circuit does not meet the preset DC load modulation conditions.

15. The wireless charging method according to claim 14, wherein the method further comprises
determining, when a load modulation mode of the receiving end module is in the AC modulation mode, whether a current output voltage of the rectifier and an output voltage of the output port of the receiving end module are in a decoupled state;
controlling, when they are in the decoupled state, the AC modulation switch to switch between the off state and the on state at the preset time period to maintain the wireless communication between the transmitting end module and the receiving end module; and modulating, when they are not in the decoupled state, a modulation direction of the output voltage of the rectifier, and controlling the AC modulation switch to switch between the off state and the on state at the preset time period to maintain the wireless communication between the transmitting end module and the receiving end module.

16. The wireless charging method according to claim 15, wherein the method further comprises
obtaining, when the output voltage of the rectifier and the output voltage of the output port of the receiving end module are in a non-decoupled state, a pre-configured second output voltage, and controlling the output port of the receiving end module to output the second output voltage to wirelessly charge the battery connected to the receiving end module, wherein
the second output voltage is less than the output voltage of the rectifier, and a difference value between the second output voltage and the output voltage of the rectifier is greater than the preset threshold.

17. An electronic device, **characterized in that** the electronic device is provided with the wireless charging system according to any one of claims 1 to 7, wherein a battery of the electronic device is a rechargeable battery, and the battery is connected to the output port of the receiving end module of the wireless charging system.
